# EUROPEAN PATENT APPLICATION

(11) **EP 4 472 127 A1**
(43) Date of publication of application: **04.12.2024**
(21) Application number: 23315225.5
(22) Date of filing: 02.06.2023
(51) Int. Cl.: H04L 9/08

(54) **METHOD FOR ENHANCING THE PRIVACY OF DELEGATED QUANTUM COMPUTATIONS, AND SYSTEM FOR IMPLEMENTING SUCH METHOD**

(71) Applicant: Quandela, 91300 Massy (FR)
(72) Inventor: Music, Luka, 75015 PARIS (FR); Hilaire, Paul, 94220 CHARENTON-LE-PONT (FR); Wein, M. Stephen, 22000 SAINT-BRIEUC (FR); Emeriau, Pierre-Emmanuel, 75018 PARIS (FR); Mansfield, Shane, 75011 PARIS (FR)
(74) Representative: Yes My Patent

(57) **Abstract**

The invention concerns a method for enhancing the privacy of delegated quantum computations, involving: a client (A) whose aim is to solve a computational problem based on sensitive data and/or using a sensitive algorithm, and a cloud computing service provider (B) who has quantum computing capacities superior to the client (A) and is therefore capable of solving the problem and/or running the client's desired algorithm; wherein the method comprises a sequence including the following steps: a) a light emitter (10) controlled by the client (A) emits at least one pulse (11) having a specific quantum state (S1), b) a quantum emitter (20) controlled by the provider (B) receives the pulse (11), c) the quantum emitter (20) emits a single photon (21) supporting a photonic qubit (Q2), with a relationship being defined between the quantum state (S1) of the pulse (11) and the photonic qubit (Q2). The invention also concerns a system for implementing this method.

## Description

### TECHNICAL FIELD OF THE INVENTION

The invention concerns a method for enhancing the privacy of delegated quantum computations. The invention also concerns a system for implementing such method. The invention is in the field of delegated quantum computations.

### BACKGROUND OF THE INVENTION

*A*. *Broadbent et al., IEEE (2009)* presented the original Universal Blind Quantum Computing (UBQC) protocol, which allows the client to hide from a quantum service provider which computation it is performing on the client's behalf. Executing the protocol requires the client to send qubit states to a remote quantum server. To do this, the client manipulates these single photons and qubit systems and transmits them to the server.

Other protocols achieving the same goal require the client to possess single-photon detectors. Such quantum devices are costly and require experts in-house to handle correctly, thereby severely limiting access to these protocols.

UBQC with semi-classical light communications has been proposed in V. Dunjko et al., Phys. Rev. Lett., 108, 200502 (2012*).* The client here only needs to manipulate attenuated laser pulses to perform the protocol, which is a lower technical requirement. However, the server is required to perform quantum non-demolition (QND) measurements to count the number of photons in each laser pulse without destroying them, which is hard to realise in practice. Then the server has to isolate a single photon from each pulse to convert the semi-classical light into qubits. Finally, the server must entangle these qubits to perform the computation. This protocol does not specify the implementation of these last two operations. Concurrently to these implementation issues, semi-classical light also leaks more information than qubit states in the original UBQC protocol. Therefore, this leakage must also be suppressed to recover a secure protocol.

### SUMMARY OF THE INVENTION

The aim of the invention is to improve protocols for blind delegated quantum computations.

The main challenges are: (1) converting the semi-classical light pulses into qubits while preserving their properties, (2) entangling these qubits together and (3) amplifying the security.

To this end, the invention concerns a method for enhancing the privacy of delegated quantum computations, involving:
- a client (A) whose aim is to solve a computational problem based on sensitive data and/or using a sensitive algorithm, and
- a cloud computing service provider (B) who has computing capacities which are superior to those of the client (A) and is therefore capable of solving the problem and/or running the client's desired algorithm;

wherein the method comprises a sequence including the following steps:
   a) a light emitter (10) controlled by the client (A) emits at least one pulse (11) having a specific quantum state (S1),
   b) a quantum emitter (20) controlled by the provider (B) receives the pulse (11),
   c) the quantum emitter (20) emits a single photon (21) supporting a photonic qubit (Q2),
with a relationship being defined between the quantum state (S1) of the pulse (11) and the photonic qubit (Q2).

The invention defined by claim 1 provides a novel protocol allowing a client to delegate any quantum computation of their choice to a quantum server owned by the service provider, in a way which preserves the privacy of the client's computation and data.

A fragment of the client's secret key is encoded in the quantum state of each pulse. The server recombines the pulses into encrypted qubit states with the help of a quantum emitter.

Afterwards, the server can use the encrypted qubits to perform the client's computation of interest via the UBQC protocol, driven by classical instructions sent by the client which depend on the computation and the secret key.

In terms of non-classical communications, the blind delegated quantum computing protocol thus defined only requires the client to send attenuated laser pulses to the server (i.e. semi-classical light) instead of qubit states as in the original UBQC protocol. The quantum emitter, with an appropriate energy level structure, acts as a "pulse-to-photonic-qubit converter".

This protocol is cryptographically secure independently of the context of execution (composable security). The security is unconditional, meaning that it holds based only on the laws of quantum physics and no other assumptions, in particular regarding the computing capabilities of an adversary (compared to, e.g., RSA encryption whose security relies on the fact that factoring large numbers is hard for adversaries trying to break the encryption).

According to further aspects of the invention, which are advantageous and can be used to define dependent claims, such a method may incorporate one or several of the following features:
- The photon (21) is entangled to the quantum emitter (20).
- The sequence is repeated, such that the quantum emitter (20) emits a series of single photons (21), each supporting a photonic qubit (Q2), with a relationship being defined between the quantum state (S1) of the pulse (11) generating a particular photon (21) of the series and the photonic qubit (Q2) supported by this particular photon (21).
- Each photon (21) of the series is entangled to the quantum emitter (20) and to previously emitted photons (21).
- The sequence is repeated, such that the quantum emitter (20) generates multiple photons (24, 25), including a main photon (24) and auxiliary photons (25), entangled into a structure (26) having at least two dimensions, each photon (24, 25) supporting a photonic qubit (Q2), with a relationship being defined between the quantum state (S1) of the pulse (11) generating a particular photon (24, 25) of the structure (26) and the photonic qubit (Q2) supported by this particular photon (24, 25).
- The structure is a 2D structure.
- The structure is a 3D structure.
- The structure (26) is a Greenberger-Horne-Zeilinger (GHZ) state.
- The sequence is repeated, such that the quantum emitter (20) emits a series of structures (26).
- Each structure (26) of the series is entangled to the quantum emitter (20) and to previously emitted structures (26).
- In a further collapse operation, the or each structure (26) collapses into a desired single qubit (27).
- The provider (B) performs this collapse operation by measuring the auxiliary photonic qubits (25) of the structure (26).
- The measurement on each auxiliary photonic qubit is performed in the Hadamard basis (i.e. X basis of the Bloch sphere).
- The light emitter (10) comprises an attenuated laser (14) coupled to a polarisation controller (15).
- The quantum state (S1) of the pulse (11) includes a polarisation angle (θ).
- Each photon (24,25) of the Greenberger-Horne-Zeilinger (GHZ) state is generated with a different random polarisation angle (θⱼ). The global polarisation angle (θ) of each GHZ state is equal to the sum of the polarisation angles (θⱼ) used during its generation process.
- The quantum emitter (20) is a quantum dot.
- The quantum emitter (20) is an atom.
- The quantum emitter (20) is an ion.

The invention also concerns a system for implementing a method as mentioned here-above. The system comprises:
- a light emitter (10) controlled by the client (A) and configured for emitting at least one pulse (11) having a specific quantum state (S1), and
- a quantum emitter (20) controlled by the provider (B), configured for receiving the pulse (11) and emitting a single photon (21) supporting a photonic qubit (Q2), with a relationship being defined between the state (S1) of the pulse (11) and the photonic qubit (Q2).

The abstract cryptography framework used to prove the composable security of our protocol has been introduced in U. Maurer and R. Renner, Innovations in Computer Science (2011*),* and applied to UBQC in V. Dunjko et al., ASIACRYPT (2014*).*

Deterministic generation of photonic entangled states using quantum emitters has been proposed in C. Schön et al., Phys. Rev. Lett., 95, 110503 (2005*),* and adapted to the kind of entangled states required for UBQC by N. Lindner and T. Rudolph, Phys. Rev. Lett., 103, 113602 (2009*).* The technique for generating the entangled state required for our protocol using non-interacting quantum emitters has been presented in P. Hilaire et al., arxiv 2205.09750 (2022*).* Experimental demonstrations of this entangled state generation using quantum emitters have been reported in P. Thomas et al., Nature 608, 677 (2022*),* D. Cogan et al., Nat. Photon. (2023*)* and N. Coste et al., arxiv, 2207, 09881 (2022*).*

### BRIEF DESCRIPTION OF THE DRAWINGS

The invention will now be explained in correspondence with the annexed figures, and as an illustrative example, without restricting the object of the invention. In the annexed figures:
- figure 1 is a schematic view of a communication between a client (A) and a provider (B);
- figure 2 is a schematic view of the system for implementing the method according to the invention, including a light emitter and a quantum emitter;
- figure 3 is a schematic view of one possible atomic level structure of the quantum emitter for the entanglement of photons;
- figure 4 is a schematic view of the entanglement of photons with the quantum emitter and previously emitted photons;
- figure 5 is a schematic view of a GHZ state and its collapse into a highly secured photonic qubit via a measurement of the auxiliary photonic qubits;
- figure 6 is a schematic view of a series of entangled GHZ states;
- figure 7 is a schematic view of the light emitter emitting a series of pulses;
- figure 8 is a schematic view of the generation of a rotated GHZ state thanks to the quantum emitter;
- figure 9 is a schematic view of the separation between the GHZ state and the quantum emitter;
- figure 10 is a schematic view of the generation of the series of entangled GHZ states separated from the quantum emitter;
- figure 11 is a schematic view of the measurement of the auxiliary qubits; and
- figure 12 is a schematic view of the formation of secure qubits.

### DETAILED DESCRIPTION OF SOME EMBODIMENTS

The invention concerns a method for enhancing the privacy of delegated quantum computations, involving a client (A) and a cloud computing service provider (B).

The client (A) wants to solve a computational problem based on sensitive data and/or using a sensitive algorithm. The service provider (B) has computing capacities superior to those of the client (A), which can be used to solve this problem and/or run the client's desired algorithm.

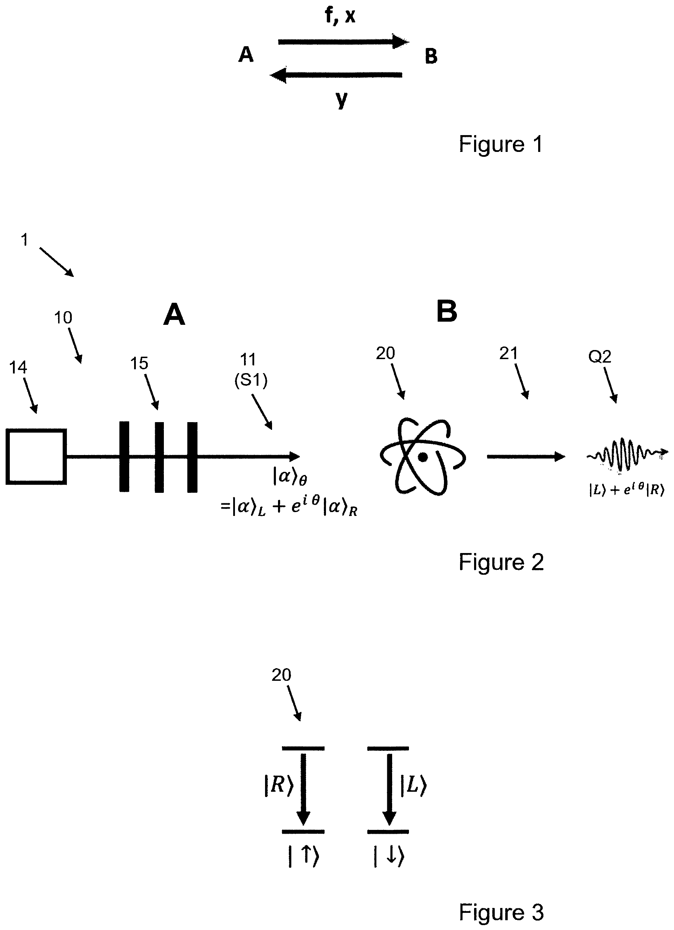

Figure 1 shows the communication between the client (A) and the provider (B).

The client (A) wants to perform a computation, for example solve a problem f based on sensitive data x. The client (A) has weak computation capabilities and cannot solve the problem by themselves. The client (A) wants to delegate the computation to the provider (B), equipped with a server, i.e. a supercomputer. In return, the provider (B) will send a computation result/solution y to the client (A).

However, the client (A) does not want the provider (B) to gain any information about their problem. The provider (B) should not learn either f, x or y.

In the case of a quantum algorithm, if the client (A) can prepare simple qubit states and send them to the provider (B), who has access to a more powerful quantum computer, then the UBQC protocol allows the client (A) to instruct the provider (B) to perform the desired quantum algorithm blindly.

The "blindness" property means that the provider (B) and any eavesdropper learn nothing about the quantum algorithm, input or output of the client (A). The UBQC protocol guarantees this based only on the laws of physics (unconditional security).

However, preparing, handling and sending qubit states is hard and costly.

It is possible to weaken the technological requirements on the side of client (A). They only need to prepare attenuated laser pulses and send them to the provider (B). This is much less technologically demanding compared to sending qubits in the original UBQC protocol, both for the generation and communication.

Figure 2 shows a system (1) configured for implementing the method according to the invention.

The client (A) has a light emitter (10) configured for emitting at least one pulse (11) having a specific quantum state (S1). Preferably, the light emitter (10) comprises a laser light emitter, which is the currently used technology for interacting with quantum emitters (20). More preferably, the light emitter (10) comprises an attenuated laser (14) coupled to a polarisation controller (15). The quantum state (S1) of the pulse (11) then depends on a polarisation angle (θ).

The provider (B) has a quantum emitter (20) configured for receiving the pulse (11) and emitting a single photon (21) supporting a photonic qubit (Q2). The quantum emitter (20) can be a quantum dot, an atom or an ion. The quantum emitter (20) is a natural emitter of single photons (21), which are the support of photonic qubits (Q2). The quantum emitter (20) can be optically manipulated with the attenuated laser pulse (11).

A relationship is defined between the state (S1) of the pulse (11) and the photonic qubit (Q2). The state (S1) of the laser pulse (11) is transferred into the emitted photonic qubit (Q2) with the same polarisation angle (θ) around the Z axis. Other relationships between the state of the laser pulse and the generated state could be exploited as well, such as a rotation around another axis of polarisation, or a larger set of states such that the unitary operations transforming one into another state of the set form a multiplicative group.

In figure 2:
- α = average number of photons in a laser pulse (11), proportional to the laser's power

- |α〉_{L}, |α〉_{R} = quantum states (S1) of the laser pulse (11), respectively Left and Right polarised
- |*L*〉, |*R*〉 = quantum states of the photonic qubits (Q2), representing a Left or Right polarised photon
- |↑〉, |↓〉 = quantum states of the quantum emitter (20)
- θ = polarisation angle of the laser (and later the qubit), acts as the secret key of the client (A) to encrypt their computation (this value must not leak to the server operated by the service provider (B))

The method comprises a sequence including the following steps:
a) a light emitter (10) emits at least one pulse (11) having a specific quantum state (S1),
b) a quantum emitter (20) receives the pulse (11),
c) the quantum emitter (20) emits a single photon (21) supporting a photonic qubit (Q2),
with a relationship defined between the quantum state (S1) of the pulse (11) and the photonic qubit (Q2).

In this sequence, the successive steps a) and c) each have a timescale in the order of the tenth of a nanosecond. The timescale of step b) depends on the distance between the client (A) and the service provider (B). The sum of these timescales is limited by the coherence time of the quantum emitter (20), that is the period of time during which the quantum emitter (20) can be controlled as a quantum system with a known quantum state.

By controlling the polarisation of the laser (10), the client (A) can control the polarisation of the photonic qubit (Q2) during the emission. This constitutes the secret key of the client (A) in the UBQC protocol.

Figure 3 shows one possible atomic level structure of the quantum emitter (20) for generating photons (21) which are entangled to their quantum emitter (20). The polarisation |*L*〉 or |*R*〉 of the emitted photons (21) depends on the state |↑〉 or |↓〉 of the quantum emitter (20).

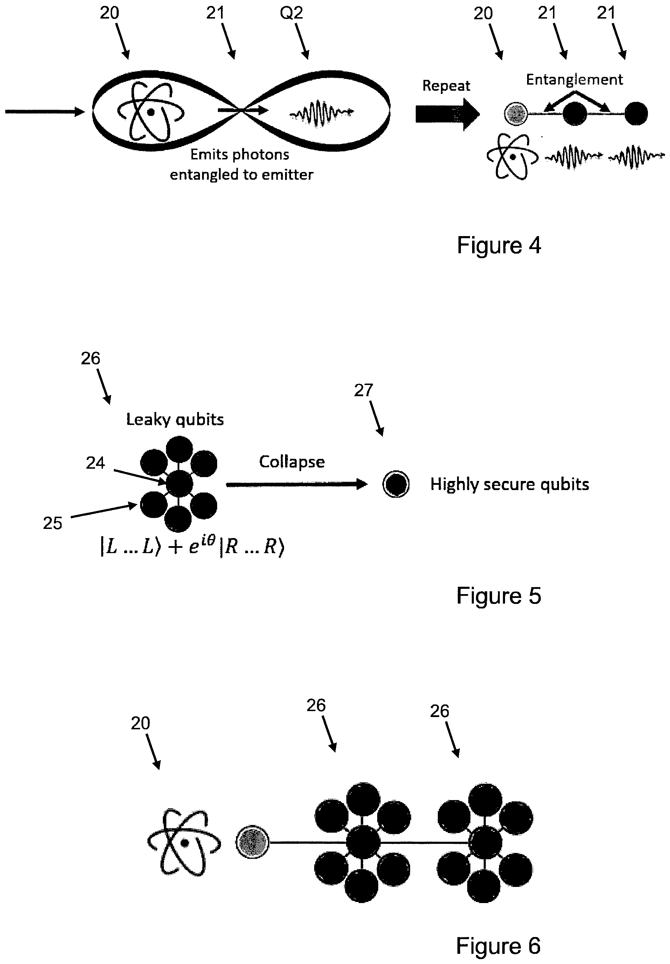

Figure 4 shows the entanglement of a newly emitted photon (21) with the quantum emitter (20) and with previously emitted photons (21).

This operation is automatically performed during step c) of the sequence described here-above. In every step c), the newly emitted photon (21) is entangled to the quantum emitter (20).

The sequence is repeated, so that in successive steps a), multiple consecutive attenuated laser pulses (11) are sent with different values for polarisation angle (θ), and in successive steps c), the quantum emitter (20) emits a series of single photons (21), each supporting a photonic qubit (Q2), with a relationship defined between the quantum state (S1) of the pulse (11) generating a particular photon (21) of the series and the photonic qubit (Q2) supported by this particular photon (21). This relationship is related to the polarisation angle (θ).

Each photon (21) of the series is entangled to the quantum emitter (20) and to previously emitted photons (21). The first emitted photon (21) is entangled to the quantum emitter (20) so long as there is a chain of photons (21) linking it to the quantum emitter (20) in the structure - graph representation - of the quantum state (S1).

At this stage, another challenge is to amplify the security of the protocol. This is because higher laser power α leads to higher probability of emitting a photon (21), but leaks more information to the server operated by the provider (B). In other words, the server can learn more information from the laser pulse (11) than from a single qubit (Q2). Consequently, we need to reduce the leakage.

To do this, we combine multiple emitted photons (21) in such a way that the server must gain information about all their polarisations to break the full protocol's security. Consequently, the security can be boosted to arbitrarily high values. We prove this in the abstract cryptography framework, which implies that our protocol is composably secure. This security amplification gadget is highly compatible with our entangled state generation scheme described here-after and can be performed at the same time with the same setup. This drastically reduces the technological requirements for implementation.

Figure 5 illustrates the use of a structure (26) to reduce the leakage and amplify the security of the protocol.

The sequence is repeated such that in successive steps c), the quantum emitter (20) generates multiple photons (24, 25) entangled into a structure (26) having at least two dimensions.

The structure (26) can be 2D or 3D. The basic protocol only requires a 2D structure. However, a 3D structure could potentially add error-correcting capabilities to the protocol (in particular to protect against photon losses).

Preferably, the structure (26) can be a Greenberger-Horne-Zeilinger (GHZ) state, as shown in the example of figure 5. The GHZ state is a quantum state whose structure can be described by a graph centered on a single vertex and branching out to all other vertices. Each vertex corresponds to a qubit initialised in a specific state and each edge correspond to an entanglement operation.

The structure (26) comprises a main photon (24) and auxiliary photons (25), which could also be named inner photon (24) and outer photons (25). Each photon (24, 25) supports a photonic qubit (Q2), with a relationship being defined between the quantum state (S1) of the pulse (11) generating a particular photon (24, 25) of the structure (26) and the photonic qubit (Q2) supported by this particular photon (24, 25).

The relationship is related to the polarisation angles (θⱼ). In successive steps a), multiple consecutive attenuated laser pulses (11) are sent with different values for polarisation angle (θⱼ), and in successive steps c), each of the multiple photonic qubits (21) of the structure (26) has a polarisation angle (θⱼ).

The qubits (Q2) are entangled into the rotated GHZ state |*L* ... *L*〉 + *e*^{iθ}|*R*... *R*〉, for θ = Σθⱼ. Then, the service provider (B) makes the qubits (Q2) collapse into the desired single qubit (27) state |*L*〉 + *e*^{iθ}|*R*〉 by measuring the outer qubits of the GHZ state.

Figure 6 shows a series of entangled GHZ states.

The sequence is repeated such that the quantum emitter (20) emits a series of structures (26). Each structure (26) of the series is entangled to the quantum emitter (20) and to previously emitted structures (26).

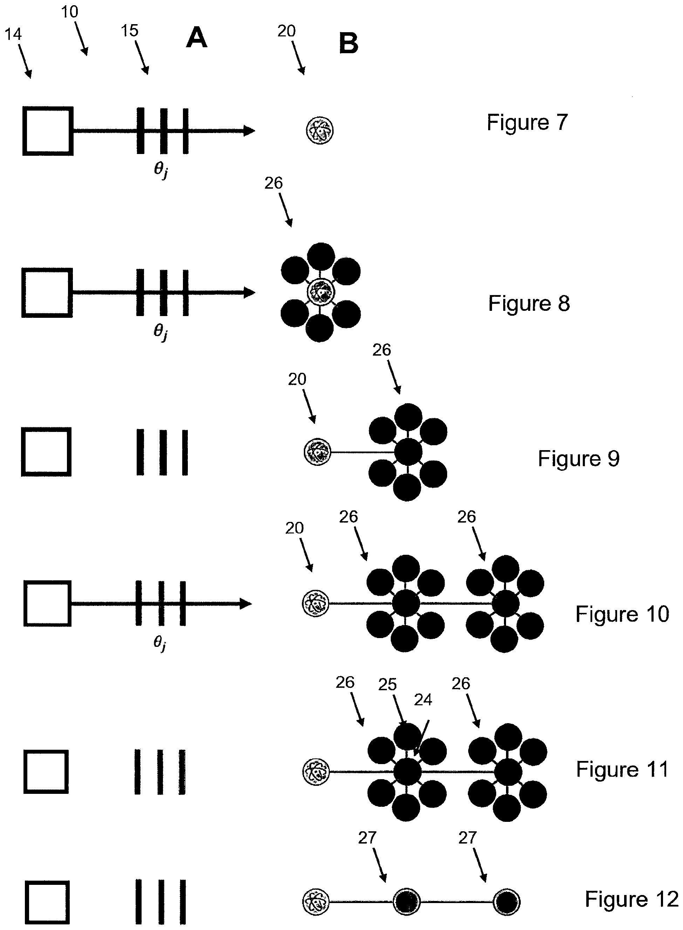

Figures 7 to 12 shows the series of sequences.

Figure 7 represents the series of steps a), where the client (A) sends laser pulses (11) sequentially with different random values for the polarisation angle (θⱼ).

Figure 8 represents the series of steps c), where the provider (B) uses these pulses (11) to emit photons (24, 25) using the quantum emitter (20). The overall state of the structure (26) generated in this way is a GHZ state whose polarisation is rotated by the sum of all angles θ = Σθⱼ.

Figure 9 represents the step where the provider (B) applies a Hadamard operation on the quantum emitter (20) to separate the created GHZ state from the emitter (20).

Figure 10 represents the repetition of the above steps, so long as the quantum emitter (20) has not decohered (lost its quantum properties), always with different random values of polarisation angles θⱼ.

Figure 11 represents the step where the provider (B) measures the outer photonic qubits (25) of the structure (26).

Figure 12 represents the final step where each structure (26) collapses into a desired single qubit (27). More precisely, the measurements performed on the outer qubits (25) of the structure (26) transfer the polarisation of the GHZ state to the main inner qubit (24), which is then in the desired state with the same polarisation. The state at the end in Figure 12 has the same structure as the one in Figure 4, but the probability of not leaking the information of each qubit has been amplified in the process.

Thus, the invention solves these three challenges:
1. The provider (B) needs to convert the attenuated laser pulses into photonic qubits (Q2) while preserving properties of the state (Q1) of the laser pulses (11). This is a very difficult task in practice using previous techniques.
2. The provider (B) needs to entangle the photonic qubits (Q2) together, that is to make them interact in a quantum mechanical way. This is an intrinsically probabilistic and demanding operation if it is done independently from the qubit generation process (e.g., non-linear interaction with atoms or intrinsically probabilistic gates in an optical quantum circuit).
3. Since the laser pulse (11) leaks more information about the computation of the client (A) than a qubit in the original UBQC, the protocol must amplify the privacy of the client (A) and recover the initial security of UBQC. This technique must be compatible with the solutions to challenges 1 and 2.

By solving these three challenges, the method according to the invention makes UBQC with semi-classical light practical.

The invention removes the need for QND measurements and entangling gates by using a quantum emitter with an appropriate energy level structure, that both acts as a "pulse-to-photonic-qubit converter" and can deterministically entangle the photons, as needed for executing arbitrary delegated quantum algorithms.

Our protocol can be used in any context where UBQC is relevant since it simplifies its implementation. This functionality becomes vital precisely when quantum computers get large enough to perform some interesting tasks better than classical computers. A client (A) with sensitive data or an innovative algorithm might then be unwilling to send it over unprotected to a quantum cloud service provider (B). On the other hand, the cost of acquiring and operating a large-scale quantum computer on their premises would be prohibitive for the client (A).

A blind delegation protocol which is technologically simple to implement both sides of the client (A) and the provider (B) alleviates these issues, thus making clients (A) more willing to run their high impact yet sensitive computations on quantum servers of provider (B) without requiring mutual trust or complex legal agreements. This affects all applications of quantum computing which fall into this category and their associated industries, from pharmaceutical drug design and medical data analysis to defense.

It is important to note that performing BQC using classical computers is not possible with the same level of security. All protocols rely on some computational hardness assumptions. For example, the RSA encryption scheme is secure so long as the adversary is incapable of factoring large numbers efficiently. On the other hand, our protocol is secure regardless of the computing capabilities of the adversary. Having access to a more powerful computer does not lower the security of our protocol. This is called unconditional or statistical security.

Furthermore, the protocol according to the invention is composable, i.e. we have proven that the protocol remains secure regardless of the context in which it is executed. It can be used as a building block in any protocol of our choice, in parallel or in sequence with other arbitrary protocols.

Finally, the security of our protocol increases exponentially with the number of photons in the GHZ state. More precisely, if the probability of leaking information about a single photon is p, then for N photons the probability of leaking the state after the collapse of the state is p^{N}. This decreases very fast with N and can be arbitrarily small.

Other non-shown embodiments can be implemented within the scope of the invention, defined by the set of claims. In addition, technical features of the different embodiments can be, in whole or part, combined with each other. Thus, the method and system 1 can be adapted to the specific requirements of the application.

## Claims

1. **Method for enhancing the privacy of delegated quantum computations, involving:**
- a client (A) whose aim is to solve a computational problem based on sensitive data and/or using a sensitive algorithm, and
- a cloud computing service provider (B) who has computing capacities which are superior to those of the client (A) and is therefore capable of solving the problem and/or running the client's desired algorithm;
**wherein the method comprises a sequence including the following steps:**
a) a light emitter (10) controlled by the client (A) emits at least one pulse (11) having a specific quantum state (S1),
b) a quantum emitter (20) controlled by the provider (B) receives the pulse (11),
c) the quantum emitter (20) emits a single photon (21) supporting a photonic qubit (Q2),
with a relationship being defined between the quantum state (S1) of the pulse (11) and the photonic qubit (Q2).

2. **Method according to claim 1,** wherein the photon (21) is entangled to the quantum emitter (20).

3. **Method according to any one of claims 1 or 2,** wherein the sequence is repeated, such that the quantum emitter (20) emits a series of single photons (21), each supporting a photonic qubit (Q2), with a relationship being defined between the quantum state (S1) of the pulse (11) generating a particular photon (21) of the series and the photonic qubit (Q2) supported by this particular photon (21).

4. **Method according to claim 2 and 3,** wherein each photon (21) of the series is entangled to the quantum emitter (20) and to previously emitted photons (21).

5. **Method according to any one of claims 1 to 4,** wherein the sequence is repeated, such that the quantum emitter (20) generates multiple photons (24, 25), including a main photon (24) and auxiliary photons (25), entangled into a structure (26) having at least two dimensions, each photon (24, 25) supporting a photonic qubit (Q2), with a relationship being defined between the quantum state (S1) of the pulse (11) generating a particular photon (24, 25) of the structure (26) and the photonic qubit (Q2) supported by this particular photon (24, 25).

6. **Method according to claim 5,** wherein the structure (26) is a Greenberger-Horne-Zeilinger (GHZ) state.

7. **Method according to any one of claims 5 or 6,** wherein the sequence is repeated, such that the quantum emitter (20) emits a series of structures (26).

8. **Method according to claim** 7, wherein each structure (26) of the series is entangled to the quantum emitter (20) and to previously emitted structures (26).

9. **Method according to any one of claims 5 to 8,** wherein in a further collapse operation, the or each structure (26) collapses into a desired single qubit (27).

10. **Method according to claim 9,** wherein the provider (B) performs this collapse operation by measuring the auxiliary photonic qubits (25) of the structure (26).

11. **Method according to any one of claims 1 to 10,** wherein the light emitter (10) comprises an attenuated laser (14) coupled to a polarisation controller (15).

12. **Method according to any one of claims 1 to 11,** wherein the quantum state (S1) of the pulse (11) includes a polarisation angle (θⱼ).

13. **Method according to claims 6 and 12,** wherein each photon (24,25) of the Greenberger-Horne-Zeilinger (GHZ) state is generated with a different random polarisation angle (θⱼ), and wherein the global polarisation angle (θ) of each Greenberger-Horne-Zeilinger (GHZ) state is equal to the sum of the polarisation angles (θⱼ) used during its generation process.

14. **Method according to any one of claims 1 to 12,** wherein the quantum emitter (20) is a quantum dot, an atom, or an ion.

15. **System for implementing a method accord to any one of the previous claims,** comprising:
- a light emitter (10) controlled by the client (A) and configured for emitting at least one pulse (11) having a specific quantum state (S1), and
- a quantum emitter (20) controlled by the provider (B), configured for receiving the pulse (11) and emitting a single photon (21) supporting a photonic qubit (Q2), with a relationship being defined between the state (S1) of the pulse (11) and the photonic qubit (Q2).
